# EUROPEAN PATENT SPECIFICATION

(11) **EP 3 454 775 B1**
(45) Date of publication and mention of the grant of the patent: **24.05.2023**
(21) Application number: 17734861.2
(22) Date of filing: 22.03.2017
(51) Int. Cl.: A61C 8/00

(54) **DENTAL IMPLANT THAT DOES NOT GET INTO THE SINUS AND SINUS IMPLANT APPLICATION APPARATUS**
ZAHNIMPLANTAT, DAS NICHT IN DIE KIEFERHÖHLE EINDRINGT, UND GERÄT ZUR ANBRINGUNG VON KIEFERHÖHLENIMPLANTATEN
IMPLANT DENTAIRE QUI NE PÉNÈTRE PAS DANS LE SINUS ET APPAREIL DE POSE D'IMPLANTS DANS LE SINUS

(30) Priority: 25.03.2016 TR 201603880
(43) Date of publication of application: 20.03.2019
(73) Proprietor: Özkan Levent Saglik Ürünleri Sanayi Ticaret Anonim Sirketi, Izmir (TR)
(72) Inventor: TEKIN Fevzi Levent, Izmir (TR)
(74) Representative: Sevinç, Cenk
(86) International application number: PCT/TR2017/050110
(87) International publication number: WO 2017/164831

(56) References cited:
- EP-A1- 2 436 342
- EP-A2- 1 269 933
- WO-A1-2006/125100
- WO-A1-2013/088385

## Description

### Technical Field

The invention relates to a sinus implant that prevents the applied implant to get into the sinus cavities at the dental implants applied to the maxilla.

### State of The Art

The dental implant is an artificial dental root made of suitable materials and implanted into the jaw bone in order to restore function and aesthetics of the missing teeth.

Today, the implant is contemplated to be the form of dental treatment to be applied the most in the 21^{st} century.

The dental implant is implanted, through surgical operation, into the maxilla or the cranium in order to support dental prosthesis such as crown, bridge, removable dental prosthesis, facial prosthesis, etc., or for use as a fixed support at the orthodontic treatments.

The dental implants applied within the sinus maxillaries located above the maxilla area are called the sinus implants. In case adequate bone height is not available in order to place dental implants of adequate length, the sinus base is lifted by employing sinus lifting surgery and bone grafting (bone meal) is applied to the cavity so formed. The dental implants are then applied to the patient after formation of desired bony tissue.

The invention no. WO2015087321 available in the prior art relates to sinus lifting apparatus. The invention mentions use of a drill, an injector for bone grafting, and an osteotome for sinus lifting operation.

In EP1269933 A2 a system for sinus lifting and placement of dental implants is disclosed. T

The invention no. BR202013032404, on the other hand, relates to an osteotome that reduces the risk of trauma and mortality when used at the patients for lifting the sinus membrane.

The invention no. US2013034830 is an injector for dental implants, wherein the injector has an inclined tip in order to facilitate movement during application and to render injection operations more consistent.

Various apparatus and products are available in the prior art for applying the sinus implant. All such products, however, are related to the process prior to applying the implant. Although said products ensure more sound implementation of the implant, the traditional structure of the applied implant as known in the art causes the dental implants to get into the sinus cavity.

In the invention proposed herein, on the other hand, a sinus implant with a structure that would prevent the dental implants to get into the sinus, and a drill and graft carrier that penetrate the sinus bottom to be used for opening the sinus.

### The Problems that the Invention Aims to Solve

The objective of the invention is to prevent especially the short implants applied during dental implants implemented within the sinus cavity located above the maxilla area from getting into the sinus cavity. This objective is achieved with a system as defined in claim 1. Advantageous aspects of the invention are defined in dependent claim 2.

### Description of the Figures

- FIGURE 1.: Sinus Implant

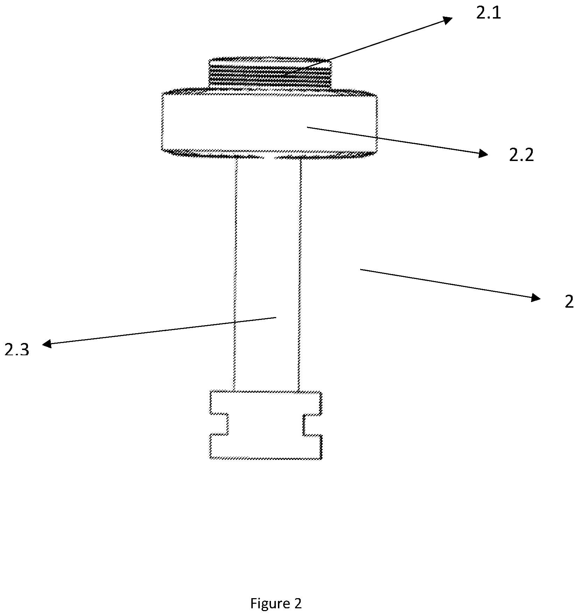

- FIGURE 2.: Sinus Drill

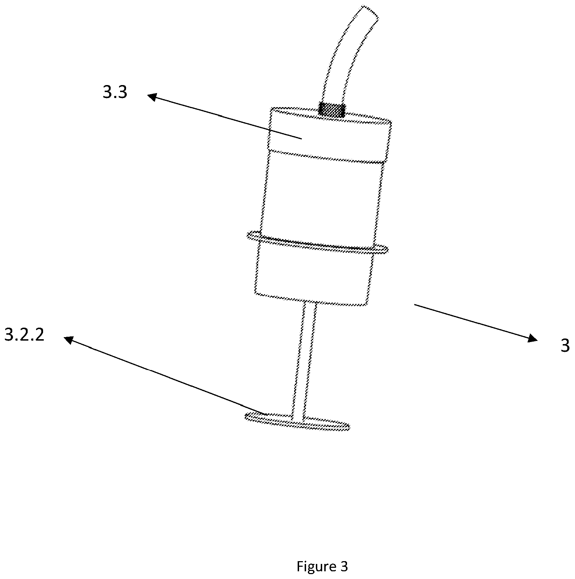

- FIGURE 3.: Port Graft
- FIGURE 4.: Port Graft Interior View

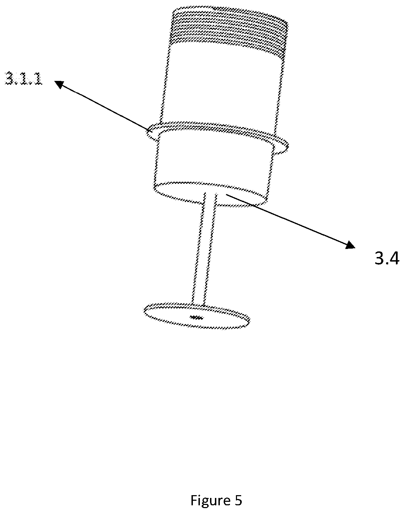

- FIGURE 5.: Port Graft Open-Ended View

### Description of the Figures

- 1.: Sinus implant
1.1 Sinus port
1.2 Bone port
1.2.1 Abutment slot
1.3 Sinus implant bottom surface

- 2.: Sinus drill
2.1 Cutting part
2.2 Part without grooves
2.3 Drill handle

- 3.: Port graft
3.1 Port graft casing
3.1.1 Port graft handle
3.2 Port graft piston
3.2.1 Driving ring
3.2.2 Port graft sap
3.3 Port graft tip
3.4 Port graft bottom surface

### Description of the Invention

The invention is a sinus implant (1) system related to a sinus implant (1), and the sinus drill (2) and port graft (3) dental designed in conformity with said sinus implant (1) that feature the structure which prevents the implants to get into the sinus.

The system of the invention comprises of a sinus implant (1) designed in such manner to enable overlapping of two cylindrical structure of different diameters, and application apparatus developed for the steps during implementation of said sinus implant (1). The application apparatus mentioned herein are the drill that drills the sinus bottom and the port graft (3) that supplies graft to the area where the sinus implant (1) will be applied for formation of bony tissue.

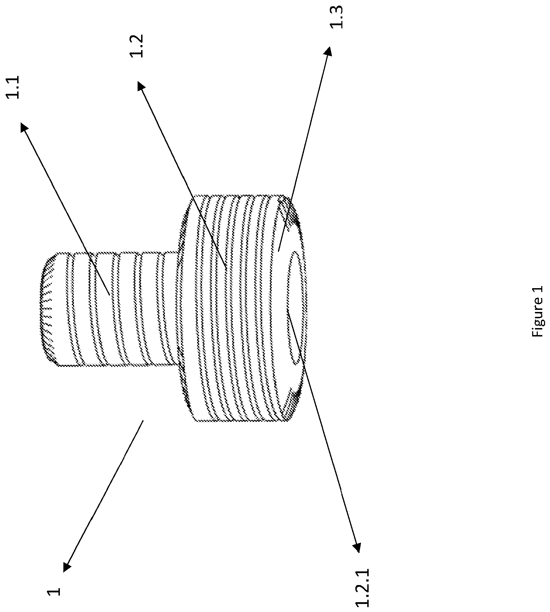

The sinus implant (1) has a solid structure and is a dental implant as illustrated in Figure 1 with a smaller diameter than the cylindrical bone port (1.2) with grooved exterior surface that remain outside the sinus bottom and the cylindrical sinus port (1.1) with grooved exterior surface that remain within the sinus.

The sinus port (1.1) with smaller diameter is concentrically fixed onto the bone port (1.2) with larger diameter.

There is a round abutment slot (1.2.1) at the sinus implant bottom surface (1.3) that enables insertion of the implant abutment. After application of the sinus implant (1), the implant abutment engages into the abutment slot (1.2.1) and the tooth is then attached onto the implant abutment.

The sinus drill (2) and the port graft (3) apparatus are used in implementation of the sinus implant (1).

The sinus drill (2) comprises of the drill handle (2.3), the part without grooves (2.2) and the cutting part (2.1), each with a cylindrical structure of various diameters.

The cutting part (2.1) that drills the sinus bottom and forms a cavity for the sinus implant (1) is present at the proximal end of the sinus drill (2). The exterior surface of the cutting part is grooved and has identical height with the sinus port (1.1) of the sinus implant (1). The diameter of the cutting part (2.1) is smaller than the part without grooves (2.2) located thereunder.

The cylindrical part without grooves (2.2) with no grooves on the exterior surface is located under the cutting part (2.1) and has a larger diameter than the cutting part (2.1).

Underneath the cutting part is the drill handle (2.3) located at the distal end of the sinus drill (2), which functions as support for other elements on the sinus drill (2), and is longer than the cutting part (2.1) grooved part but has smaller diameter.

The hole within the jaw bone that enables implementation of the sinus implant (1) is produced by means of methods known in the art. The gingiva is cut in order to access the bone. The bony tissue is then drilled using the drills in order to form a slot so as to enable insertion of the implant.

The sinus drill (2) enters into the implant slot established via methods known in the art. The cutting part (2.1) located at the top section of the sinus drill (2) then reaches to the sinus bottom through the hole drilled and then drills the sinus bottom through cutting grooved surface. At the same time, the part without grooves (2.2) located under the cutting part seats on the sinus bottom in order to enable that the hole drilled at the sinus bottom is drilled at a certain depth and at the diameter equal to the diameter of the cutting part (2.1). The part without grooves (2.2) acts as a stopper and enables that only the cutting part enters into the sinus bottom.

In this manner, a hole equal to the diameter of the cutting part (2.1) is drilled at the sinus bottom in order to enable insertion of the sinus implant (1).

After drilling the sinus bottom using the sinus drill (2), the cavity required for implementing the implant is achieved. However, the bony tissue is required around the sinus port (1.1) of the sinus implant (1) that penetrates into the sinus in order to enable the sinus implant (1) to take hold within the sinus. The bony tissue is formed through the port graft (3) at the cavity made available within the sinus.

The port graft (3) then injects the bony tissue to the area between the sinus bottom through the hole drilled using the sinus drill (2).

The port graft (3) is in the form of an injector and comprises of port graft casing (3.1), port graft piston (3.2) and the port graft tip (3.3).

The port graft casing (3.1) is the cylindrical chamber that forms the casing of the port graft (3). The distal end of the port graft casing (3.1) is open and has a grooved exterior surface. The port graft bottom surface (3.4) at the proximal part, on the other hand, is sealed and incorporates the piston housing at its center, the diameter of which enables travel of the port graft piston (3.2).

The exterior surface of the port graft casing (3.1) contains the port graft handle (3.1.1) in the form of a ring that encircles the port graft casing (3.1).

The port graft tip (3.3) is attached to the open-ended and grooved distal end of the port graft casing (3.1) when the graft will be injected. The exterior surface of the port graft tip (3.3) is in the form of a grieved circle and features a protruding inclined cylindrical pipe thereon.

The port graft piston (3.2) enters into the closed port graft bottom surface (3.4) of the port graft casing (3.1) that contain cavity. The port graft piston (3.2) is the cylindrical support element that drives the graft within the port graft casing (3.1).

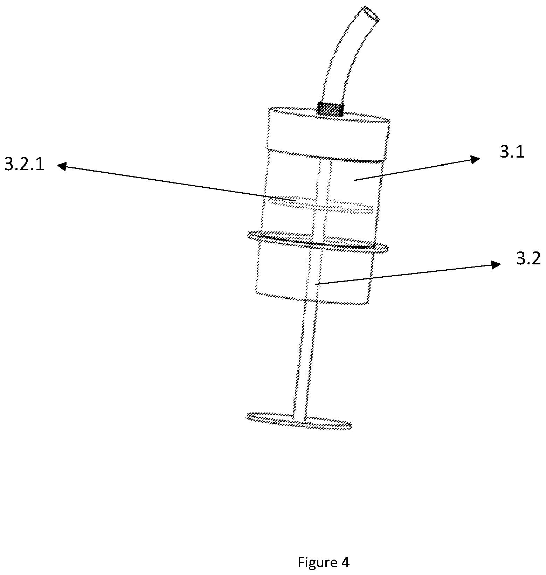

The section of the port graft casing (3.1) that extend from the port graft tip (3.3) up to the driving ring (3.2.1) is flexible. The circular driving ring (3.2.1) with a smaller diameter than the port graft casing (3.1), which pushes the graft within the port graft casing (3.1) towards the port graft tip (3.3), is located at the area where the flexible part of the port graft piston (3.2) ends. As can be seen from Figure 4, the annular shaped port graft handle (3.2.2) is located at the lowermost section of the part of the port graft piston (3.2) that remain outside the port graft casing (3.1).

## Claims

1. A dental implant system comprising;
- a cylindrical titanium solid sinus implant (1), comprising a cylindrical sinus port (1.1) suitable to be positioned within the sinus and a cylindrical bone port (1.2) that is suitable to be positioned within the maxillary bone under the sinus bottom, wherein the diameter of cylindrical sinus port (1.1) is smaller than the diameter of the cylindrical bone port (1.2), wherein the cylindrical sinus port (1.1) and the cylindrical bone port (1.2) are provided with a grooved exterior surface,
- a sinus drill (2) comprising: a cylindrical cutting part (2.1) having a grooved exterior surface which is located at the proximal end of the sinus drill (2), said cutting part (2.1) being configured for creating the necessary bone cavity for the sinus implant (1) at the sinus bottom by drilling during implementation of said sinus implant (1), a cylindrical part without grooves (2.2) located under the cutting part (2.1) and configured to act as a stopper and enabling that the cavity drilled at the sinus bottom is drilled at a certain depth and a drill handle (2.3) which is located at the distal end of the sinus drill (2) and functioning as a support for the other elements of the sinus drill (2), and which is longer than the cutting part (2.1); wherein the cutting part (2.1) has identical height with the sinus port (1.1) of the sinus implant (1); wherein the cylindrical part without grooves (2.2) is located between the cylindrical cutting part (2.1) and the drill handle (2.3); wherein the cylindrical cutting part (2.1) has a diameter larger than the diameter of the drill handle (2.3) and has a diameter smaller than the diameter of the cylindrical part without grooves (2.2); and the drill handle (2.3) has a diameter smaller than the diameter of the cylindrical cutting part (2.1) and smaller than the diameter of the cylindrical part without grooves (2.2),
- a port graft (3) that is configured for injecting bone graft into a cavity formed within the sinus.

2. The dental implant system according to claim 1, wherein:
- the port graft (3) is in the form of an injector and comprises a port graft casing (3.1), a cylindrical port graft piston (3.2) and a port graft tip (3.3), and
- the port graft casing (3.1) is configured as a cylindrical chamber, wherein the port graft casing (3.1) comprises a port graft handle (3.1.1) on its exterior surface that encircles the port graft casing (3.1) in annular form; and
- the port graft piston (3.2) is configured to drive a graft within the port graft casing (3.1); and
- the port graft casing (3.1) has an open distal end with a grooved exterior surface and a sealed proximal end with a port graft bottom surface (3.4) that contains, at its center, a piston slot of a diameter that allows insertion of the port graft piston (3.2); and
- the port graft tip (3.3) is configured for injecting a graft; and
- the port graft tip (3.3) comprises a protruding inclined cylindrical pipe and is configured to be attached to the open-ended and grooved distal end of the port graft casing (3.1) when the graft will be injected;
- a circular driving ring (3.2.1) with a smaller diameter than the diameter of the port graft casing (3.1) is provided within the port graft casing (3.1), the circular driving ring (3.2.1) being configured to push a graft within the port graft casing (3.1) towards the port graft tip (3.3); and the port graft casing (3.1) is flexible from the port graft tip (3.3) up to the driving ring (3.2.1); and wherein
- a circular port graft handle (3.2.2) is located at the proximal end of the port graft piston (3.2).

## Patentansprüche

1. Ein Zahnimplantatsystem umfassend;
- einen zylindrischen Titan- Solid-Sinus-Implantat (1), der einen zylindrischen Sinusport (1.1) umfasst, der geeignet ist, innerhalb des Sinus positioniert zu werden, und einen zylindrischen Knochenport (1.2), der geeignet ist, unter dem Sinusboden im Oberkieferknochen positioniert zu werden, wobei der Durchmesser des zylindrischen Sinusports (1.1) kleiner ist als der Durchmesser des zylindrischen Knochenports (1.2), wobei der zylindrische Sinusport (1.1) und der zylindrische Knochenport (1.2) mit einer geriffelten Außenfläche versehen sind,
- ein Sinusbohrer (2) umfassend: einen zylindrischen Schneideteil (2.1) mit einer geriffelten Außenfläche, das sich am proximalen Ende des Sinusbohrers (2) befindet, wobei der Schneidteil (2.1) konfiguriert ist, um den erforderlichen Knochenhohlraum für das Sinusimplantat (1) am Sinusboden durch Bohren beim Einsetzen des Sinusimplantats (1) zu erzeugen, einen zylindrischen Teil ohne Rillen (2.2), das sich unter dem Schneideteil (2.1) befindet und als Stopper konfiguriert ist, um sicherzustellen, dass die am Sinusboden gebohrte Hohlraum in einer bestimmten Tiefe gebohrt wird, und einen Bohrgriff (2.3), der sich am distalen Ende des Sinusbohrers (2) befindet und als Stütze für die anderen Elemente des Sinusbohrers (2) fungiert, und der länger ist als das Schneideteil (2.1); wobei das Schneideteil (2.1) dieselbe Höhe wie der Sinusport (1.1) des Sinusimplantats (1) aufweist; wobei das zylindrische Teil ohne Rillen (2.2) zwischen dem zylindrischen Schneideteil (2.1) und dem Bohrgriff (2.3) angeordnet ist; wobei das zylindrische Schneideteil (2.1) einen größeren Durchmesser als der Durchmesser des Bohrgriffs (2.3) aufweist und einen kleineren Durchmesser als der Durchmesser des zylindrischen Teils ohne Rillen aufweist (2.2); und der Bohrgriff (2.3) einen kleineren Durchmesser als der Durchmesser des zylindrischen Schneideteils (2.1) und einen kleineren Durchmesser als das zylindrische Teil ohne Rillen (2.2) aufweist,
- ein Porttransplantat (3), das für die Injektion von Knochentransplantat in einen in der Kieferhöhle gebildeten Hohlraum konfiguriert ist.

2. Das Zahnimplantatsystem nach Anspruch 1, wobei:
- das Porttransplantat (3) die Form eines Injektors hat und ein Porttransplantatgehäuse (3.1), einen zylindrischen Porttransplantatkolben (3.2) und eine Porttransplantatspitze (3.3) umfasst, und
- das Porttransplantatgehäuse (3.1) als zylindrische Kammer ausgebildet ist, wobei das Porttransplantatgehäuse (3.1) an seiner Außenfläche einen Porttransplantatgriff (3.1.1) aufweist, der das Porttransplantatgehäuse (3.1) ringförmig umgibt; und
- der Porttransplantatkolben (3.2) konfiguriert ist, um ein Transplantat innerhalb des Porttransplantatgehäuses (3.1) zu antreiben; und
- das Porttransplantatgehäuse (3.1) ein offenes distales Ende mit einer gerillten Außenfläche und ein verschlossenes proximales Ende mit einer Porttransplantatbodenfläche (3.4) aufweist, die in ihrer Mitte einen Kolbenschlitz mit einem Durchmesser enthält, der das Einführen des Porttransplantatkolbens (3.2) ermöglicht; und
- die Porttransplantatspitze (3.3) ist für die Injektion eines Transplantats konfiguriert; und
- die Porttransplantatspitze (3.3) ein vorstehendes geneigtes zylindrisches Rohr umfasst und konfiguriert ist, um an dem offenendigen und gerillten distalen Ende des Porttransplantatgehäuses (3.1) angebracht zu werden, wenn das Transplantat injiziert werden soll;
- ein kreisförmiger Antriebsring (3.2.1) mit einem kleineren Durchmesser als der Durchmesser des Porttransplantatgehäuses (3.1) innerhalb des Porttransplantatgehäuses (3.1) vorgesehen ist, wobei der kreisförmige Antriebsring (3.2.1) konfiguriert ist, um ein Transplantat innerhalb des Porttransplantatgehäuses (3.1) in Richtung der Porttransplantatspitze (3.3) zu drücken; und das Porttransplantatgehäuse (3.1) von der Porttransplantatspitze (3.3) bis zu dem Antriebsring (3.2.1) flexibel ist; und wobei
- ein kreisförmiger Porttransplantatgriff (3.2.2) am proximalen Ende des Porttransplantatkolbens (3.2) angeordnet ist.

## Revendications

1. Un système d'implant dentaire comprenant;
- un implant de sinus solide cylindrique en titane (1), comprenant un orifice de sinus cylindrique (1.1) adapté pour être positionné à l'intérieur du sinus et un orifice d'os cylindrique (1.2) qui est adapté pour être positionné à l'intérieur de l'os maxillaire sous le fond du sinus, dans lequel le diamètre de l'orifice sinus cylindrique (1.1) est inférieur au diamètre de l'orifice osseux cylindrique (1.2), dans lequel l'orifice de sinus cylindrique (1.1) et l'orifice d'os cylindrique (1.2) sont pourvus d'une surface extérieure rainurée,
- un foret de sinus (2) comprenant: une partie coupante cylindrique (2.1) ayant une surface extérieure rainurée qui est située à l'extrémité proximale du foret de sinus (2), ladite partie coupante (2.1) étant configurée pour créer la cavité osseuse nécessaire pour l'implant de sinus (1) au fond du sinus par forage pendant la mise en œuvre dudit implant de sinus (1), une partie cylindrique sans rainures (2. 2) située sous la partie coupante (2.1) et configurée pour agir comme a butée et permettre que la cavité de foret au fond du sinus soit forée à une certaine profondeur et un manche de foret (2.3) qui est située à l'extrémité distale du foret de sinus (2) et qui fonctionne comme un support pour les autres éléments du foret de sinus (2), et qui est plus longue que la partie coupante (2. 1); dans laquelle la partie coupante (2.1) a une hauteur identique à celle de l'orifice de sinus (1.1) de l'implant de sinus (1); dans laquelle la partie cylindrique sans rainures (2.2) est située entre la partie coupante cylindrique (2.1) et la poignée de forage (2.3); dans laquelle la partie coupante cylindrique (2.1) a un diamètre supérieur au diamètre du manche de la perceuse (2.3) et un diamètre inférieur au diamètre de la partie cylindrique sans rainures (2.2); et le manche du foret (2.3) a un diamètre inférieur au diamètre de la partie coupante cylindrique (2.1) et inférieur au diamètre de la partie cylindrique sans rainures (2.2),
- une greffe d'orifice (3) configurée pour injecter une greffe osseuse dans une cavité formée à l'intérieur du sinus.

2. Système d'implant dentaire selon la revendication 1, dans lequel:
- la greffe d'orifice (3) se présente sous la forme d'un injecteur et comprend une enveloppe de greffe d'orifice (3.1), un piston cylindrique de greffe d'orifice (3.2) et une extrémité de greffe d'orifice (3.3), et
- l'enveloppe de la greffe d'orifice (3.1) est configurée comme une chambre cylindrique, dans laquelle l'enveloppe de la greffe d'orifice (3.1) comprend un manche de greffe d'orifice (3.1.1) sur sa surface extérieure qui entoure l'enveloppe de la greffe d'orifice (3.1) sous forme annulaire; et
- le piston de greffe d'orifice (3.2) est configuré pour entraîner une greffe à l'intérieur de l'enveloppe de greffe d'orifice (3.1); et
- l'enveloppe de greffe d'orifice (3.1) a une extrémité distale ouverte avec une surface extérieure rainurée et une extrémité proximale scellée avec une surface inférieure de greffe d'orifice (3.4) qui contient, dans son centre, une fente de piston d'un diamètre qui permet l'insertion du piston de greffe d'orifice (3.2); et
- l'extrémité de la greffe d'orifice (3.3) est configurée pour injecter une greffe; et
- l'extrémité de la greffe d'orifice (3.3) comprend un tuyau cylindrique incliné en saillie et est configurée pour être fixée à l'extrémité distale ouverte et rainurée de l'enveloppe de greffe d'orifice (3.1) lorsque la greffe sera injectée;
- un anneau d'entraînement circulaire (3.2.1) d'un diamètre inférieur au diamètre de l'enveloppe de la greffe d'orifice (3.1) est fourni à l'intérieur de l'enveloppe de la greffe d'orifice (3.1), l'anneau d'entraînement circulaire (3.2.1) étant configuré pour pousser une greffe à l'intérieur de l'enveloppe de la greffe d'orifice (3.1) vers l'extrémité de la greffe d'orifice (3.3); et l'enveloppe de la greffe d'orifice (3.1) est flexible de l'extrémité de la greffe d'orifice (3.3) jusqu'à l'anneau d'entraînement (3.2.1); et dans lequel
- un manche de greffe d'orifice circulaire (3.2.2) est situé à l'extrémité proximale du piston de greffe d'orifice (3.2).
